# EUROPEAN PATENT APPLICATION

(11) **EP 4 008 467 A1**
(43) Date of publication of application: **08.06.2022**
(21) Application number: 20848359.4
(22) Date of filing: 30.07.2020
(51) Int. Cl.: B23D 61/02, B23D 45/00, B23D 47/00, B23D 63/14, B23D 65/02

(54) **TIPPED CIRCULAR SAW AND METHOD FOR MANUFACTURING TIPPED CIRCULAR SAW**

(30) Priority: 01.08.2019 BR 102019015981
(71) Applicant: Sul Corte Importadora de Ferramentas Ltda., 95044-090 Caxias do Sul- RS (BR)
(72) Inventor: SPANHOLI TELES, Fernando, 95044-090 Caxias do Sul - RS (BR); SPANHOLI, Gustavo, 95044-090 Caxias do Sul - RS (BR)
(74) Representative: Bompart, Marc
(86) International application number: PCT/BR2020/050295
(87) International publication number: WO 2021/016695

(57) **Abstract**

The invention proposes a tipped circular saw blade (10) comprising a saw body (11) with a peripheral circular region made of a first material, the peripheral circular region having a plurality of slots (12), and a plurality of tips (13) made of a second material, each tip (13) fixed to a respective slot (12) to form a saw tooth (14) defined between an anterior gullet (15) and a posterior gullet (16), each saw tooth (14) having a cutting edge (141). In accordance with the invention, each saw tooth (14) has a leading face (142) defined between the anterior gullet (15) and the cutting edge (141), the leading face (142) having a profile that includes a single curved surface formed by an R radius, the curved surface encompassing the first material and the second material. The invention further proposes a method of manufacturing a tipped circular saw blade (10), the method comprising a step of forming a saw body (11) with a peripheral circular region made of a first material, the peripheral circular region having a plurality of slots (12); a step of joining a plurality of prefabricated tips (13a), made of a second material, to the respective slots (12) of the peripheral region of the saw body (11), obtaining a preliminary tipped circular saw blade (10a); and a step of grinding the preliminary tipped circular saw blade (10a) to form a plurality of saw teeth (14), each saw tooth (14) defined between an anterior gullet (15) and a posterior gullet (16), and having a cutting edge (141) and a leading face (142) defined between the anterior gullet (15) and the cutting edge (141), the leading face (142) having a profile that includes a single curved surface formed by an R radius, the curved surface encompassing the first material and the second material.

## Description

### TECHNICAL FIELD

The present invention refers to a tipped circular saw blade and a method of manufacturing a tipped circular saw blade, more particularly suitable for cutting metals.

### PRIOR ART

Among the circular saw blades used for cutting metals, there are solid saw blades, such as high-speed steel saw blades, and tipped saw blades, which comprise a saw body and tips fixed to the saw body.

A conventional tipped circular saw blade is described in WO2007080554. The saw blade comprises a saw body with a peripheral circular region made of a first material, such as, for example, steel, the peripheral circular region having a plurality of slots. The saw blade further comprises a plurality of tips made of a second material, such as, for example, carbide or cermet, each tip fixed to a respective slot to form a saw tooth defined between an anterior gullet and a posterior gullet, each saw tooth having a cutting edge.

Each saw tooth further comprises a leading face defined between the anterior gullet and the cutting edge. The leading face has a profile, in the direction from the cutting edge to the anterior gullet, including a rake face inclined at a rake angle; a second planar surface, inclined at a second angle; a third planar surface, inclined at a third angle and forming an angle between 90 and 180 degrees with the second planar surface; and a fourth planar surface approximately parallel to a radial median plane of each saw tooth. The second planar surface and the third planar surface are joined together by a concave surface, defined by a first concave radius, while the third planar surface and the fourth planar surface are joined together by a convex surface, defined by a convex radius. The rake face, planar surfaces, concave and convex surfaces are part of the tip.

In addition, the profile of the leading face includes a curved surface extending from the lower end of the fourth planar surface, the curved surface being defined by a second concave radius and being part of the saw body. Thus, the profile of the leading face of each saw tooth is formed by four planar surfaces and three curved surfaces defined by three different radii.

During the cutting of a material, the saw teeth of the tipped circular saw blade are gradually worn, which causes a change in the profile of the respective leading faces of each tooth. With the increasing wear of the saw teeth, problems arise, such as, for example, a worse cut finish and an increase in vibration during cutting, which ultimately determine the end of the useful life of the saw blade, and its replacement by a new tipped circular saw blade. Alternatively, it is considered the recovery of the worn tipped circular saw blade, by means of regrinding the saw teeth in order to restore the profile of the respective leading faces, or by replacing the worn tips with new ones. However, these alternatives are complex and time-consuming, to the point of being economically unfeasible.

### SUMMARY OF THE INVENTION

In order to solve the prior art drawbacks, the present invention proposes a tipped circular saw blade comprising a saw body with a peripheral circular region made of a first material, the peripheral circular region having a plurality of slots. The tipped circular saw blade further comprises a plurality of tips made of a second material, each tip fixed to a respective slot to form a saw tooth defined between an anterior gullet and a posterior gullet, each saw tooth having a cutting edge. In accordance with the invention, each saw tooth has a leading face defined between the anterior gullet and the cutting edge, the leading face having a profile that includes a single curved surface formed by an R radius, the curved surface encompassing the first material and the second material.

The present invention further proposes a method of manufacturing a tipped circular saw blade, the method comprising a step of forming a saw body with a peripheral circular region made of a first material, the peripheral circular region having a plurality of slots; a step of joining a plurality of prefabricated tips, made of a second material, to the respective slots in the peripheral region of the saw body, obtaining a preliminary tipped circular saw blade; and a step of grinding the preliminary tipped circular saw blade to form a plurality of saw teeth, each saw tooth defined between anterior gullet and a posterior gullet, and having a cutting edge and a leading face defined between the anterior gullet and the cutting edge, the leading face having a profile that includes a single curved surface formed by an R radius, the curved surface encompassing the first material and the second material.

Advantageously, the fact that the tipped circular saw blade has each saw tooth with a leading face having a profile with a single curved surface of R radius makes the process of regrinding the saw blade simple and fast, and therefore economically viable, which ends up allowing the reuse of a worn tipped circular saw blade.

### BRIEF DESCRIPTION OF THE FIGURES

The invention shall be better understood with the following detailed description, which shall be better interpreted with the aid of the figures, namely:
Figure 1 is a front view of a tipped circular saw blade according to the present invention.
Figure 2 is an enlarged view of region "A" indicated in Figure 1.
Figure 3 is a perspective view of a saw tooth of the tipped circular saw blade.
Figure 4 is a front view of a saw body of the tipped circular saw blade.
Figure 5 is an enlarged view of region "B" indicated in Figure 4.
Figure 6 is a front view of a preliminary tipped circular saw blade.
Figure 7 is an enlarged view of region "C" indicated in Figure 6.

### DETAILED DESCRIPTION OF THE INVENTION

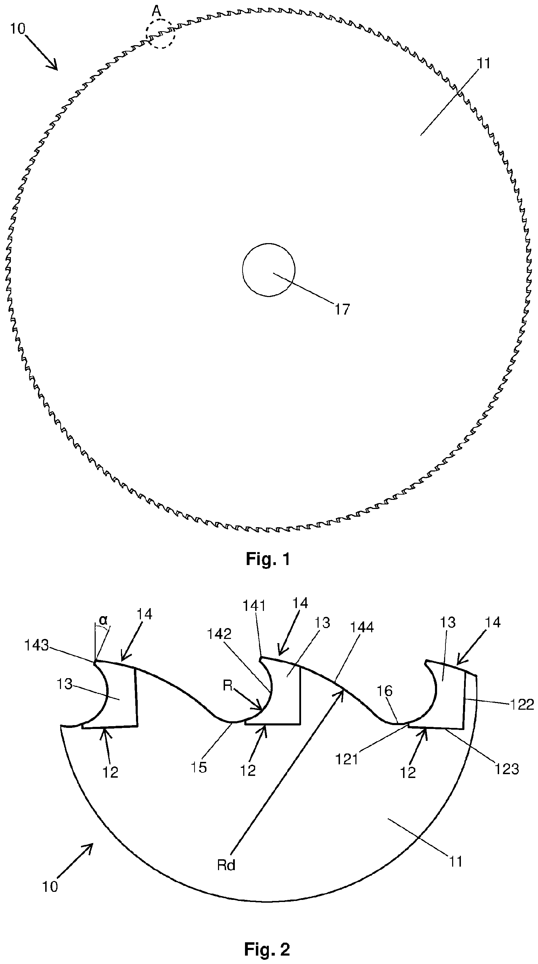

As shown in Figures 1 to 3, the tipped circular saw blade (10) comprises a saw body (11) with a peripheral circular region made of a first material, the peripheral circular region having a plurality of slots (12). The tipped circular saw blade further comprises a plurality of tips (13) made of a second material, each tip (13) fixed to a respective slot (12) to form a saw tooth (14) defined between an anterior gullet (15) and a posterior gullet (16), each saw tooth (14) having a cutting edge (141). According to the invention, each gullet (15, 16) is interpreted as being a point on the peripheral surface of the saw body (11) positioned between two adjacent cutting edges (141), said point being coincident with a point of smaller radius related to a central point of the saw body (11).

In accordance with the invention, each saw tooth (14) has a leading face (142) defined between the anterior gullet (15) and the cutting edge (141), the leading face (142) having a profile that includes a single curved surface formed by an R radius, the curved surface encompassing the first material and the second material.

Preferably, each saw tooth (14) comprises a back (144) disposed between the cutting edge (141) and the posterior gullet (16), said back (144) having a curved surface formed by an Rd dorsal radius, the curved surface of the back (144) encompassing the first material and the second material.

Advantageously, the fact that the tipped circular saw blade (10) has each saw tooth (14) with a leading face (142) having a profile with a single curved surface of R radius makes the process of regrinding the saw blade simple and fast, and therefore economically viable, which ends up allowing the reuse of a worn tipped circular saw blade. Additionally, the fact that the tipped circular saw blade (10) has each saw tooth (14) with a back (144) having a curved surface of Rd dorsal radius also favors the saw blade regrinding process. For example, the regrinding process can be carried out on a CNC grinding machine.

The tipped circular saw blade (10) has a parameter called pitch, which is defined as the distance between the cutting edge (141) of a saw tooth (14) and the cutting edge (141) of a saw tooth (14) adjacent. Preferably, the tipped circular saw blade (10) has a pitch of between 3 to 15 millimeters, more preferably, between 3 to 8 millimeters. Preferably, the R radius of the curved surface of the leading face (142) is between 0.1 to 0.5 times the pitch of the tipped circular saw blade (10), more preferably, from 0.2 to 0.3 times the pitch. Preferably, the Rd dorsal radius of the curved surface of the back (144) has a value between 0.5 to 1.5 times the pitch of the tipped circular saw blade (10), more preferably 0.8 to 1.2 times the pitch. For example, the tipped circular saw blade (10) can be configured with a diameter of 400 millimeters, a pitch of 7 millimeters, a R radius of 1.75 millimeters and a Rd dorsal radius of 7 millimeters. In another example, the tipped circular saw blade (10) can be configured with a diameter of 400 millimeters, a pitch of 5 millimeters, R radius of 1.3 millimeters and Rd dorsal radius of 5 millimeters.

Each tip (13) is fixed to the respective slot (12) by surfaces corresponding to the shape of the slot (12). In the embodiment shown, as best shown in Figure 2, each slot (12) comprises an anterior wall (121), a posterior wall (122) and a base (123) positioned between said walls (121, 122). In this case, each tip (13) has correspondent surfaces joining the walls (121, 122) and base (123) of the respective slot (12). Alternatively, the slot (12) can have other shapes, such as, for example, an "L" shape formed by a base and a posterior wall, or a semicircular shape. For example, the joint between each tip (13) and the respective slot (12) can be carried out by welding or brazing.

In the embodiment shown, the leading face (142) comprises a rake face (143), arranged between the cutting edge (141) and the curved surface of R radius, said rake face (143) being inclined at a negative rake angle (a). In an alternative embodiment, the rake face (143) is inclined at a positive rake angle. In another alternative embodiment, the curved surface of the leading face (142) extends to the cutting edge (141) so as to configure a positive rake angle. Note that, in this case, the leading face (142) does not comprise a rake face (143).

The present invention further proposes a method of manufacturing a tipped circular saw blade (10), the method comprising a step of forming a saw body (11) with a peripheral circular region made of a first material, the peripheral circular region having a plurality of slots (12); a step of joining a plurality of prefabricated tips (13a), made of a second material, to the respective slots (12) of the peripheral region of the saw body (11), obtaining a preliminary tipped circular saw blade (10a); and a step of grinding the preliminary tipped circular saw blade (10a) to form a plurality of saw teeth (14), each saw tooth (14) defined between an anterior gullet (15) and a posterior gullet (16), and having a cutting edge (141) and a leading face (142) defined between the anterior gullet (15) and cutting edge (141), the leading face (142) having a profile that includes a single curved surface formed by an R radius, the curved surface encompassing the first material and the second material.

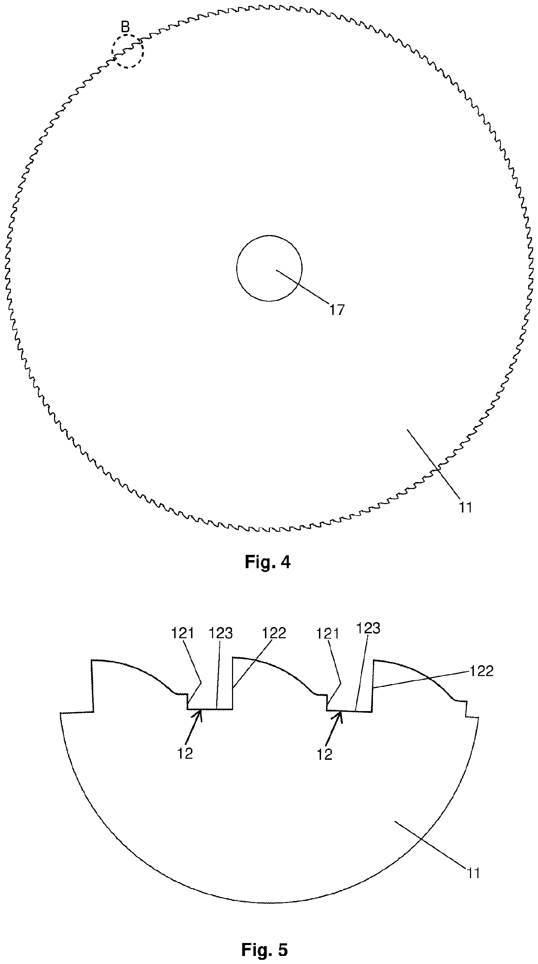

For example, the step of forming the saw body (11) can be carried out by a laser cutting in a plate, obtaining a saw body (11) in one piece with the peripheral circular region provided with slots (12). In the embodiment shown, each slot (12) is configured to comprise an anterior wall (121), a posterior wall (122) and a base (123) positioned between said walls (121, 122), as shown in Figures 4 and 5. Alternatively, the slot (12) can have other shapes, such as, for example, an "L" shape formed by a base and a posterior wall, or a semicircular shape.

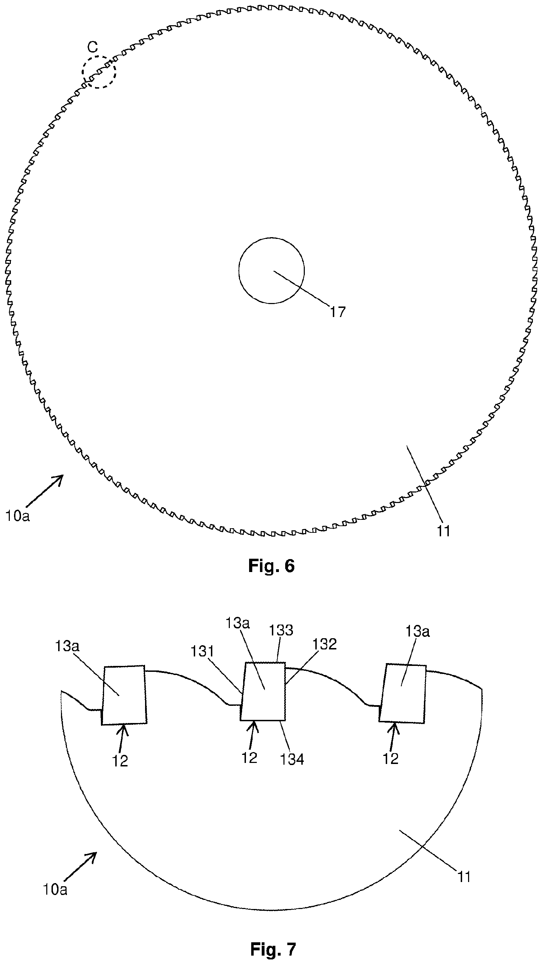

For example, the joining step is performed by welding or brazing. According to the embodiment shown, the joining step comprises joining a front portion (131) of the prefabricated tip (13a) to the anterior wall (121) of the slot (12), joining a rear portion (132) of the prefabricated tip (13a) to the posterior wall (122) of the slot (12), and joining a lower portion (134) of the prefabricated tip (13a) to the base (123) of the same slot (12), obtaining the preliminary tipped circular saw blade (10a), as shown in Figures 6 and 7. If the slot (12) has other shapes, each prefabricated tip (13a) is joined to the respective slot (12) by surfaces corresponding to the shape of the slot (12).

For example, the grinding step of the preliminary tipped circular saw blade (10a) can be carried out on a CNC grinding machine. In the embodiment shown, the grinding step comprises removing a portion of the saw body (11) so as to form the anterior gullet (15) and a part of the curved surface encompassing the first material, and removing a front portion (131) of the prefabricated tip (13a) so as to form a part of the curved surface encompassing the second material, obtaining the curved surface of R radius of the leading face (142). Furthermore, the grinding step comprises removing an upper portion (133) of the prefabricated tip (13a) and a portion of the saw body (11) so as to form a back (144) of the saw tooth (14), said back (144) having a curved surface formed by a Rd dorsal radius, the curved back surface (144) encompassing the first material and the second material.

In the embodiment shown, the grinding step further comprises removing a portion of the prefabricated tip (13a) to form a rake face (143) between the curved surface of the leading face (142) and the cutting edge (141). After the grinding step, the saw teeth (14) are obtained, as shown in Figure 2. In an alternative embodiment not shown, the grinding step does not include forming the rake face (143), so the curved surface of the leading face (142) extends to the cutting edge (141).

In an alternative embodiment not shown, the step of forming the saw body (11) includes the manufacture of the anterior gullet (15) and a part of the curved surface encompassing the first material, said part positioned between the anterior gullet (15) and the respective slot (12), eliminating the need to make this geometry in the grinding step. Note that, in this alternative embodiment, the curved surface of R radius of the leading face (142) has one part made during the forming step of the saw body (11) and another part made during the grinding step.

Preferably, the tipped circular saw blade (10) has a pitch with a value between 3 to 15 millimeters, more preferably, between 3 to 8 millimeters. Preferably, the R radius of the curved surface of the leading face (142) is between 0.1 to 0.5 times the pitch of the tipped circular saw blade (10), more preferably, from 0.2 to 0.3 times the pitch. Preferably, the Rd dorsal radius of the curved surface of the back (144) has a value between 0.5 to 1.5 times the pitch of the tipped circular saw blade (10), more preferably 0.8 to 1.2 times the pitch. For example, the tipped circular saw blade (10) can be configured with a diameter of 400 millimeters, a pitch of 7 millimeters, a R radius of 1.75 millimeters and a Rd dorsal radius of 7 millimeters. In another example, the tipped circular saw blade (10) can be configured with a diameter of 400 millimeters, a pitch of 5 millimeters, a R radius of 1.3 millimeters and a Rd dorsal radius of 5 millimeters.

In the embodiment shown, the rake face (143) is inclined at a negative rake angle (α). In an alternative embodiment, the rake face (143) is inclined at a positive rake angle. In another alternative embodiment, the curved surface of the leading face (142) extends to the cutting edge (141), and the rake angle is positive.

In the embodiment shown, the tipped circular saw blade (10) comprises a central hole (17), wherein said central hole (17) is connectable to a shaft that transmits rotation to the tipped circular saw blade (10). For example, the central hole (17) is made in the step of forming the saw body (11).

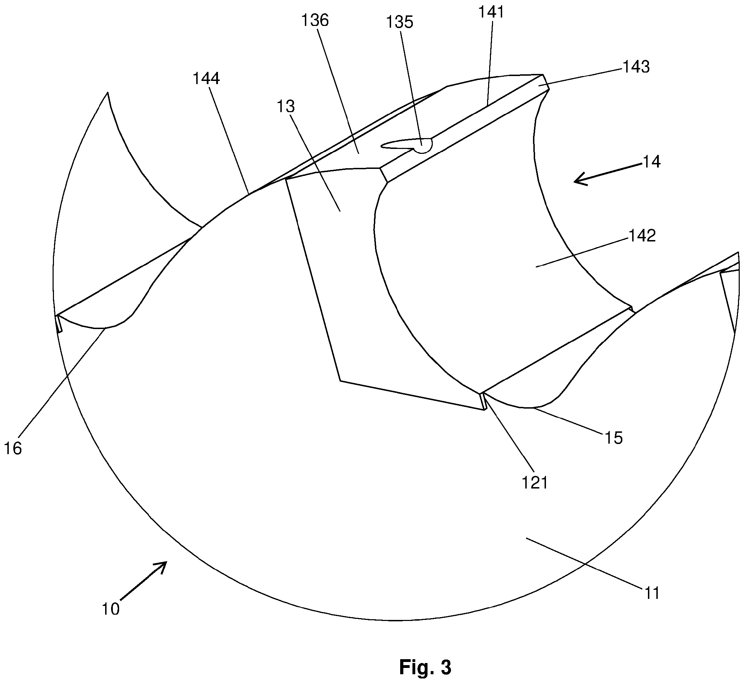

In the embodiment illustrated, as shown in Figure 3, each saw tooth (14) comprises a chip breaker groove (135) arranged on the rake face (143) and extended by a top surface (136) of the tip (13). The position of the groove (135) may vary along the rake face (143) and may be arranged in a different position on each saw tooth (14). The chip breaker grooves (135) can be made in a complementary step carried out after the grinding. In addition, the tipped circular saw blade (10) can receive other known operations, such as surface grinding, application of coating, among others.

In the illustrated embodiment, the tipped circular saw blade (10) has a constant pitch, that is, the pitch is the same between all saw teeth (14). In an alternative embodiment, the tipped circular saw blade can be made with a sequence of pitches that vary as a function of a reference pitch. For example, the sequence can vary in percentage depending on the reference pitch as follows: 90-95-100-105-110-105-100-95, this sequence repeating along the peripheral circular region of the tipped circular saw blade.

Normally, the second material, used in the tips (13), is harder than the first material, used in the peripheral circular region of the saw body (11). For example, the first material may be steel and the second material may be carbide or cermet, however other materials may be used.

The preferred or alternative embodiments described herein do not have the power to limit the present invention to structural forms, and there may be constructive variations that are equivalent without, however, escaping the scope of protection of the invention.

## Claims

1. **TIPPED CIRCULAR SAW BLADE,** comprising
a saw body (11) with a peripheral circular region made of a first material, the peripheral circular region having a plurality of slots (12),
and a plurality of tips (13) made of a second material, each tip (13) fixed to a respective slot (12) to form a saw tooth (14) defined between an anterior gullet (15) and a posterior gullet (16), each saw tooth (14) having a cutting edge (141),
**characterized in that**
each saw tooth (14) has a leading face (142) defined between the anterior gullet (15) and the cutting edge (141), the leading face (142) having a profile that includes a single curved surface formed by an R radius, the curved surface encompassing the first material and the second material.

2. **TIPPED CIRCULAR SAW BLADE,** according to claim 1, **characterized in that** each saw tooth (14) comprises a back (144) arranged between the cutting edge (141) and the posterior gullet (16), said back (144) having a curved surface formed by an Rd dorsal radius, the curved surface of the back (144) encompassing the first material and the second material.

3. **TIPPED CIRCULAR SAW BLADE,** according to any of the preceding claims, **characterized in that** comprising a pitch with a value between 3 and 15 millimeters, preferably between 3 and 8 millimeters.

4. **TIPPED CIRCULAR SAW BLADE,** according to any of the preceding claims, **characterized in that** the R radius of the curved surface of the leading face (142) has a value between 0.1 to 0.5 times the pitch of the tipped circular saw blade (10), preferably from 0.2 to 0.3 times the pitch.

5. **TIPPED CIRCULAR SAW BLADE,** according to any of claims 2 to 4, **characterized in that** the Rd dorsal radius of the curved surface of the back (144) has a value between 0.5 to 1.5 times the pitch of the tipped circular saw blade (10), preferably 0.8 to 1.2 times the pitch.

6. **TIPPED CIRCULAR SAW BLADE,** according to any of the preceding claims, **characterized in that** each slot (12) comprises an anterior wall (121), a posterior wall (122) and a base (123) positioned between said walls (121, 122).

7. **METHOD OF MANUFACTURING A TIPPED CIRCULAR SAW BLADE, characterized in that** the method comprises the steps of
forming a saw body (11) with a peripheral circular region made of a first material, the peripheral circular region having a plurality of slots (12),
joining a plurality of prefabricated tips (13a), made of a second material, to the respective slots (12) of the peripheral region of the saw body (11), obtaining a preliminary tipped circular saw blade (10a),
grinding the preliminary tipped circular saw blade (10a) to form a plurality of saw teeth (14), each saw tooth (14) defined between an anterior gullet (15) and a posterior gullet (16), and having a cutting edge (141) and a leading face (142) defined between the anterior gullet (15) and the cutting edge (141), the leading face (142) having a profile that includes a single curved surface formed by an R radius, the curved surface encompassing the first material and the second material.

8. **METHOD,** according to claim 7, **characterized in that** the tipped circular saw blade (10) has a pitch with a value between 3 to 15 millimeters, preferably between 3 to 8 millimeters.

9. **METHOD,** according to claims 7 or 8, **characterized in that** the R radius of the curved surface of the leading face (142) has a value between 0.1 to 0.5 times the pitch of the tipped circular saw blade (10), preferably of 0.2 to 0.3 times the pitch.

10. **METHOD,** according to any one of claims 7 to 9, **characterized in that** the grinding step comprises
removing a front portion (131) of the prefabricated tip (13a) so as to form a part of the curved surface encompassing the second material, and
removing an upper portion (133) of the prefabricated tip (13a) and a portion of the saw body (11) so as to form a back (144) of the saw tooth (14), said back (144) having a curved surface formed by an Rd dorsal radius, the curved surface of the back (144) encompassing the first material and the second material.

11. **METHOD,** according to claim 10, **characterized in that** the Rd dorsal radius of the curved surface of the back (144) has a value between 0.5 to 1.5 times the pitch of the tipped circular saw blade (10), preferably from 0.8 to 0.8 to 1.2 times the pitch.

12. **METHOD,** according to any one of claims 7 to 11, **characterized in that** the grinding step comprises removing a portion of the saw body (11) to form the anterior gullet (15) and a part of the curved surface encompassing the first material.

13. **METHOD,** according to any one of claims 7 to 11, **characterized in that** the step of forming the saw body (11) includes making the anterior gullet (15) and a part of the curved surface encompassing the first material, said part positioned between the anterior gullet (15) and the respective slot (12).

14. **METHOD,** according to any of claims 7 to 13, **characterized in that** each slot (12) comprises an anterior wall (121), a posterior wall (122) and a base (123) positioned between said walls (121, 122).

15. **METHOD,** according to claim 14, **characterized in that** the joining step comprises joining a front portion (131) of the prefabricated tip (13a) to the anterior wall (121) of the slot (12), joining a rear portion (132) of the prefabricated tip (13a) to the posterior wall (122) of the slot (12), and joining a lower portion (134) of the prefabricated tip (13a) to the base (123) of the slot (12).
